# EUROPÄISCHE PATENTANMELDUNG

(11) **EP 3 203 111 A1**
(43) Veröffentlichungstag der Anmeldung: **09.08.2017**
(21) Anmeldenummer: 16153840.0
(22) Anmeldetag: 02.02.2016
(51) Int. Cl.: F16H 1/20, B60K 11/08, B60H 1/00, F24F 13/14, F16H 57/021, H02K 7/116, F16H 57/02

(54) **LUFTKLAPPENAKTUATOR**

(71) Anmelder: Magna Auteca GmbH, 8160 Krottendorf bei Weiz (AT)
(72) Erfinder: PALVOELGYI, Martin, 8311 Markt Hartmannsdorf (AT); SCHADLER, Bernhard, 8211 Oberrettenbach (AT)
(74) Vertreter: Zangger, Bernd

(57) **Zusammenfassung**

Ein Luftklappenaktuator, umfassend einen Rotor (1) mit einem Rotorstirnrad (2) und zumindest ein erstes, zweites und drittes Stirnrad (3, 4, 5), die zusammen ein zumindest dreistufiges Stirnradgetriebe bilden, wobei das erste Stirnrad (3) vom Rotorstirnrad (2) antreibbar ist und das dritte Stirnrad (5) oder ein vom dritten Stirnrad (5) antreibbares weiteres Stirnrad ein Abtriebsstirnrad (6) bildet, wobei zumindest zwei der Stirnräder (3, 5) des Stirnradgetriebes an einer gemeinsamen Achse (7) drehbar gelagert sind.

## Beschreibung

### Gebiet der Erfindung

Die vorliegende Erfindung betrifft einen Luftklappenaktuator, insbesondere zur Verwendung in einem Fahrzeug.

### Stand der Technik

Ein Luftklappenaktuator kann als Stellantrieb in einem Kraftfahrzeug eingesetzt werden, insbesondere zur Verstellung einer Luftklappe einer Klimaanlage oder von Klappen eines Kühlergrills eines Kraftfahrzeuges.

Derartige Luftklappenaktuatoren müssen in sehr beengten Platzverhältnissen eingesetzt werden können, oft müssen mehrere derartige Aktuatoren beispielsweise an einem einzigen Klimagerät verwendet werden, dabei sind jedoch die Drehmomentanforderungen trotz geforderter geringer Außenmaße hoch, so dass Getriebe mit hohen Untersetzungen erforderlich sind.

Aus der DE 10 2012 007 583 A1 ist ein Getriebe mit mindestens zwei Untersetzungsstufen bekannt, wobei jede Untersetzungsstufe in einer Ebene angeordnet ist, die durch ihren Abstand zum Gehäuseboden definiert sind, wobei das Antriebszahnrad in der obersten Ebene mit dem größten Abstand angeordnet ist und das Abtriebszahnrad in der untersten Ebene mit dem geringsten Abstand angeordnet ist, wobei die Untersetzungsstufen vom Antriebszahnrad zum Abtriebszahnrad in kontinuierlich absteigenden Ebenen angeordnet sind. Diese Anordnung kann zwar bezüglich Festigkeit vorteilhaft sein, benötigt aber einen relativ großen Bauraum.

### Zusammenfassung der Erfindung

Es ist eine Aufgabe der Erfindung, einen Luftklappenaktuator anzugeben, der sehr kleine Außenmaße aufweist und hohen Drehmomentanforderungen gerecht wird.

Die Lösung der Aufgabe erfolgt durch einen Luftklappenaktuator, umfassend einen Rotor mit einem Rotorstirnrad und zumindest ein erstes, zweites und drittes Stirnrad, die zusammen ein zumindest dreistufiges Stirnradgetriebe bilden, wobei das erste Stirnrad vom Rotorstirnrad antreibbar ist und das dritte Stirnrad oder ein vom dritten Stirnrad antreibbares weiteres Stirnrad ein Abtriebsstirnrad bildet, wobei zumindest zwei der Stirnräder des Stirnradgetriebes an einer gemeinsamen Achse drehbar gelagert sind.

Erfindungsgemäß wird eine feststehende Achse zur Lagerung von zwei verschiedenen Stirnrädern, insbesondere von zwei verschiedenen Doppelstirnrädern, genutzt. Hierdurch wird eine Achse weniger benötigt als bei üblichen Anordnungen der Stirnräder.

Das vom dritten Stirnrad antreibbare weitere Stirnrad, nämlich das Abtriebsstirnrad, wird vom dritten Stirnrad vorzugsweise unmittelbar angetrieben, so dass insgesamt ein vierstufiges Stirnradgetriebe verwendet wird. Das Abtriebsstirnrad kann aber auch mittelbar vom dritten Stirnrad angetrieben werden, so dass ein Stirnradgetriebe mit mehr als vier Stufen realisiert werden kann.

Das erste Stirnrad wird unmittelbar vom Rotorstirnrad angetrieben.

Vorzugsweise sind die Stirnräder des Untersetzungsgetriebes, also zumindest das erste und das zweite Stirnrad, bevorzugt auch das dritte Stirnrad, als Doppelstirnrad ausgebildet. Die Doppelstirnräder umfassen jeweils ein kleines und ein großes Zahnrad, also zwei Zahnräder mit unterschiedlichem Durchmesser, die zueinander drehfest sind, beispielsweise einstückig ausgebildet.

Bevorzugt sind die zwei an einer gemeinsamen Achse gelagerten Stirnräder des Stirnradgetriebes an ihren einander zugewandten Seiten, also Seitenflächen der Stirnräder, aneinander abgestützt. Besonders bevorzugt sind dabei jeweils die kleinen Zahnräder der beiden als Doppelstirnräder ausgebildeten betroffenen Stirnräder aneinander abgestützt. Die beiden kleinen Zahnräder an der gemeinsamen Achse sind also innenliegend ausgebildet.

Vorzugsweise sind die zwei an einer gemeinsamen Achse gelagerten Stirnräder des Stirnradgetriebes an ihren einander abgewandten Seiten an einem Gehäuse des Luftklappenaktuators abgestützt, beispielsweise an einer Seite an einem Untergehäuse oder Boden und an der anderen Seite der Achse an einem Obergehäuse oder Deckel des Gehäuses.

Die zwei an einer gemeinsamen Achse gelagerten Stirnräder des Stirnradgetriebes sind vorzugsweise das erste und das dritte Stirnrad.

Zusätzlich zum ersten und dritten Stirnrad, die an einer gemeinsamen Achse gelagerten sind, können auch das Rotorstirnrad und das zweite Stirnrad an einer weiteren gemeinsamen Achse gelagert sein, um eine weitere Achse einzusparen. Je nach erforderlicher Ausbildung der Zahnräder kann dies jedoch auch einen größeren Bauraum erfordern, als getrennte Achsen für das Rotorstirnrad und das zweite Stirnrad.

Bevorzugt sind alle Stirnräder des Übersetzungsgetriebes, insbesondere das erste, zweite und dritte Stirnrad, und bevorzugt auch das Rotorstirnrad, auf Achsen gelagert, die die gleiche Länge aufweisen. Die Achsen sind bevorzugt aus Stahl gefertigt.

Das Abtriebsstirnrad ist vorzugsweise so angeordnet, dass es für eine Drehmomentabnahme von beiden Seiten des Abtriebsstirnrads zugänglich ist. Zur Abnahme des Drehmoments kann beispielsweise radial innen im Abtriebsstirnrad oder in einem mit dem Abtriebsstirnrad drehfesten Bauteil eine nicht-kreisförmige Ausnehmung vorgesehen sein, so dass die Drehmomentabnahme über einen Formschluss mit der Ausnehmung erfolgen kann.

Das Abtriebsstirnrad ist bevorzugt direkt im Gehäuse gelagert.

### Kurzbeschreibung der Zeichnungen

Die Erfindung wird im Folgenden beispielhaft unter Bezugnahme auf die Zeichnungen beschrieben.
- Fig. 1: ist eine Seitenansicht eines Getriebes eines erfindungsgemäßen Luftklappenaktuators in aufgefalteter Anordnung.
- Fig. 2: ist eine Ansicht von oben auf ein Getriebe eines erfindungsgemäßen Luftklappenaktuators in tatsächlicher Anordnung.
- Fig. 3: ist eine Explosionsansicht eines erfindungsgemäßen Luftklappenaktuators.

### Detaillierte Beschreibung der Erfindung

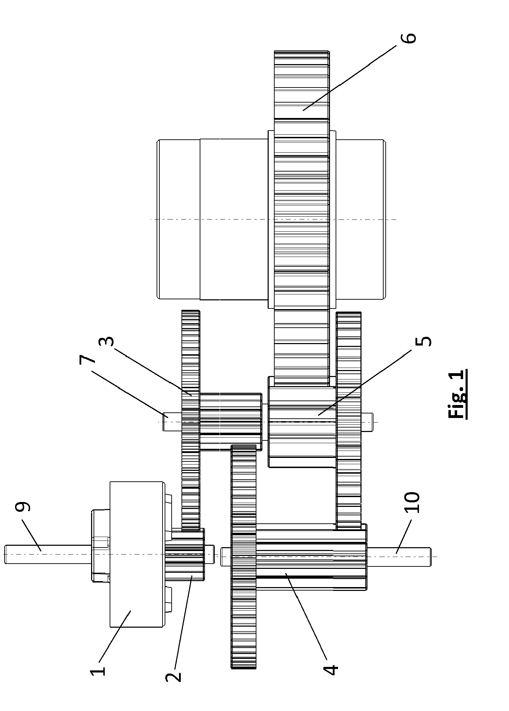

In Fig. 1 ist eine Seitenansicht eines Getriebes eines erfindungsgemäßen Luftklappenaktuators in aufgefalteter Anordnung dargestellt. Die "Auffaltung" bedeutet dabei, dass die Positionen der Stirnräder so dargestellt sind, dass der Kraftübertragungspfad zwischen den einzelnen Getriebestufen besser zu erkennen ist, in dem alle Achsen in eine gemeinsame Ebene gelegt sind, nämlich die Zeichnungsebene.

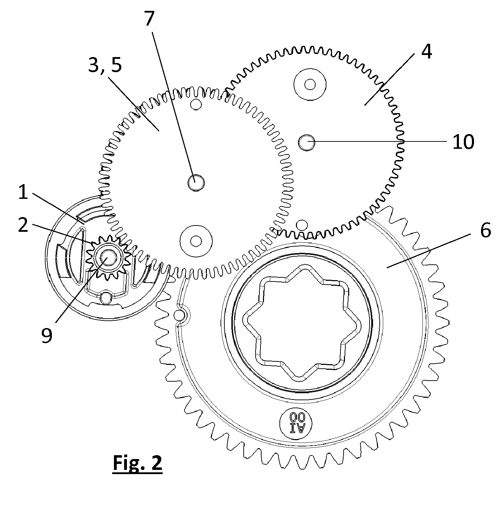

Der Luftklappenaktuator umfasst einen Rotor 1 mit einem Rotorstirnrad 2. Der Rotor 1 kann teil eines Schrittmotors, insbesondere eines bürstenlosen Gleichstrommotors mit einer Ansteuerelektronik, sein. Ein vierstufiges Stirnradgetriebe umfasst ein erstes Stirnrad 3, zweites Stirnrad 4 und drittes Stirnrad 5, die alle als Doppelstirnräder ausgebildet sind. Das erste Stirnrad 3, genauer dessen großes Zahnrad, wird im Betrieb vom Rotorstirnrad 2 angetrieben. Das kleine Zahnrad des ersten Stirnrads 3 kämmt mit dem großen Zahnrad eines zweiten Stirnrads 4, dessen kleines Zahnrad wiederum mit dem großen Zahnrad eines dritten Stirnrads 5 kämmt. Das kleine Zahnrad des dritten Stirnrads 5 treibt schließlich ein weiteres Stirnrad, nämlich das Abtriebsstirnrad 6 an. Zwei der Stirnräder des Untersetzungsgetriebes, nämlich das erste Stirnrad 3 und das dritte Stirnrad 5 sind an einer gemeinsamen Achse 7 drehbar gelagert. Das erste Stirnrad 3 und das dritte Stirnrad 5 können, so wie in Fig. 1 dargestellt, große Zahnräder mit etwa gleichem Durchmesser verwenden. Daher ist das dritte Stirnrad 5 in der Ansicht der Fig. 2 vom ersten Stirnrad 3 verdeckt. Die Achse 9 des Rotorstirnrads 2 sowie die Achse 10 des zweiten Stirnrads 4 haben dieselbe Länge wie die gemeinsame Achse 7 und sind ebenfalls durch Stahlachsen realisiert.

Die zwei an der gemeinsamen Achse 7 gelagerten Stirnräder 3, 5 des Stirnradgetriebes sind an ihren einander zugewandten Seiten, jeweils der kleinen Zahnräder, aneinander abgestützt. Da sich das erste Stirnrad 3 und das dritte Stirnrad 5 im Betrieb gleichsinnig drehen, ist die Relativgeschwindigkeit zwischen beiden Zahnrädern kleiner als die Relativgeschwindigkeit zum Gehäuse, wodurch ein Verschleiß an diesen Seiten verringert wird.

An ihren voneinander abgewandten Seiten stützen sich die großen Zahnräder des ersten und dritten Stirnrads 3, 5 am Gehäuse 8 ab.

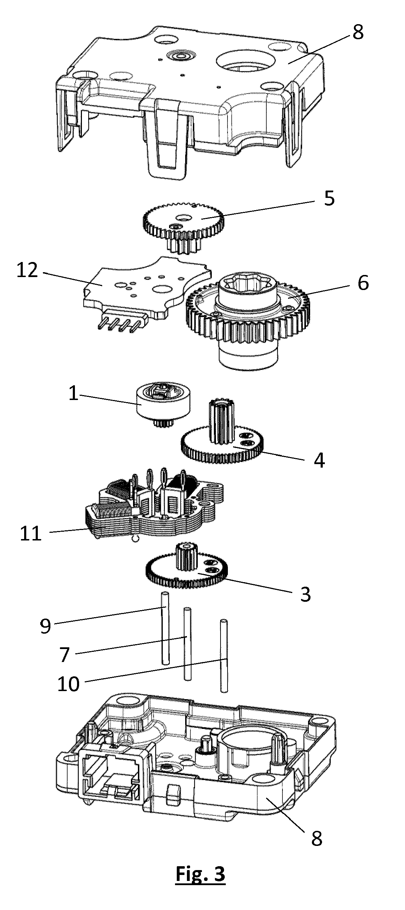

Fig. 3 zeigt den selben erfindungsgemäßen Luftklappenaktuator der Fig. 1 und 2 in einer Explosionsansicht, wobei auch ein Gehäuse 8 zur Aufnahme des Getriebes, bestehend aus einem Untergehäuse und einem Obergehäuse, dargestellt ist, sowie der Stator 11 des Antriebsmotors und eine Elektronikeinheit 12 zur Ansteuerung des Antriebsmotors.

### Bezugszeichenliste

- 1: Rotor
- 2: Rotorstirnrad
- 3: erstes Stirnrad
- 4: zweites Stirnrad
- 5: drittes Stirnrad
- 6: Abtriebsstirnrad
- 7: gemeinsame Achse
- 8: Gehäuse
- 9: Achse
- 10: Achse
- 11: Stator
- 12: Elektronikeinheit

## Patentansprüche

1. Luftklappenaktuator, umfassend einen Rotor (1) mit einem Rotorstirnrad (2) und zumindest ein erstes, zweites und drittes Stirnrad (3, 4, 5), die zusammen ein zumindest dreistufiges Stirnradgetriebe bilden, wobei das erste Stirnrad (3) vom Rotorstirnrad (2) antreibbar ist und das dritte Stirnrad (5) oder ein vom dritten Stirnrad (5) antreibbares weiteres Stirnrad ein Abtriebsstirnrad (6) bildet,
**dadurch gekennzeichnet dass** zumindest zwei der Stirnräder (3, 5) des Stirnradgetriebes an einer gemeinsamen Achse (7) drehbar gelagert sind.

2. Luftklappenaktuator nach Anspruch 1,
**dadurch gekennzeichnet, dass** zumindest das erste und das zweite Stirnrad (3, 4), bevorzugt auch das dritte Stirnrad (5), als Doppelstirnrad ausgebildet ist, jeweils umfassend ein kleines und ein großes Zahnrad.

3. Luftklappenaktuator nach zumindest einem der vorhergehenden Ansprüche,
**dadurch gekennzeichnet, dass** die zwei an einer gemeinsamen Achse (7) gelagerten Stirnräder (3, 5) des Stirnradgetriebes an ihren einander zugewandten Seiten aneinander abgestützt sind.

4. Luftklappenaktuator nach zumindest einem der vorhergehenden Ansprüche,
**dadurch gekennzeichnet, dass** die zwei an einer gemeinsamen Achse (7) gelagerten Stirnräder (3, 5) des Stirnradgetriebes an ihren einander abgewandten Seiten an einem Gehäuse (8) des Luftklappenaktuators abgestützt sind.

5. Luftklappenaktuator nach zumindest einem der vorhergehenden Ansprüche,
**dadurch gekennzeichnet, dass** die zwei an einer gemeinsamen Achse (7) gelagerten Stirnräder (3, 5) des Stirnradgetriebes das erste und das dritte Stirnrad (3, 5) sind.

6. Luftklappenaktuator nach zumindest einem der vorhergehenden Ansprüche,
**dadurch gekennzeichnet, dass** zusätzlich zum ersten und dritten Stirnrad (3, 5), die an einer gemeinsamen Achse (7) gelagerten sind, auch das Rotorstirnrad (2) und das zweite Stirnrad (4) an einer weiteren gemeinsamen Achse gelagert sind.

7. Luftklappenaktuator nach zumindest einem der vorhergehenden Ansprüche,
**dadurch gekennzeichnet, dass** das erste, zweite und dritte Stirnrad (3, 4, 5), bevorzugt auch das Rotorstirnrad (2), auf Achsen gelagert sind, die alle die gleiche Länge aufweisen.

8. Luftklappenaktuator nach zumindest einem der vorhergehenden Ansprüche,
**dadurch gekennzeichnet, dass** das Abtriebsstirnrad (6) so angeordnet ist, dass es für eine Drehmomentabnahme von beiden Seiten des Abtriebsstirnrads (6) zugänglich ist.

9. Luftklappenaktuator nach zumindest einem der vorhergehenden Ansprüche,
**dadurch gekennzeichnet, dass** das Abtriebsstirnrad (6) direkt im Gehäuse (8) gelagert ist.
